# EUROPEAN PATENT APPLICATION

(11) **EP 4 312 170 A1**
(43) Date of publication of application: **31.01.2024**
(21) Application number: 22306130.0
(22) Date of filing: 28.07.2022
(51) Int. Cl.: G06Q 10/10

(54) **DEVICE AND METHOD FOR ASSOCIATING A USER TO AN OPTIMAL JOB OFFER**

(71) Applicant: Gojob, 13090 Aix-en-Provence (FR)
(72) Inventor: DELECRAZ, Sébastien, 13090 Aix-en-Provence (FR); OULLIER, Olivier, 13013 Marseille (FR); BECUWE, Martin, 13090 Aix-en-Provence (FR); BOUXIN, Henri, 13090 Aix-en-Provence (FR); ELTARR, Loukman, 13090 Aix-en-Provence (FR)
(74) Representative: Icosa

(57) **Abstract**

The invention relates to a device (1) for providing to a user information on at least one job offer based on the analysis of the user's information associated to its career, qualifications and education, said device (1) comprising: at least one input configured to receive: at least one structured text comprising the user's information associated to his career, qualifications and education; a list of job offers comprising, for each job offer, at least one qualification and at least one skill required for the associated job offer; a list of available qualifications associated to the job offers of the list of job offers; at least one processor configured to: estimate at least one skill of the user using a previously trained first machine learning algorithm configured to receive as input the at least one structured text and provide as output at least one skill; for each available qualification from the list of available qualifications that is not already acquired by the user, evaluate an effort score representing an effort for the user to obtain said available qualification and, using the estimated at least one skill of the user, evaluate at least one missing skill of the user necessary to obtain said available qualification; compute a matching score between the user and each of the job offer in the list of job offers using a binary classification machine learning model; apply at least one predefined rule based on the matching score and/or said effort score, so as to obtain at least one proposition of job offer chosen from the list of job offers.

## Description

### FIELD OF INVENTION

The present invention relates to a device and a computer-implemented method for associating a user to an optimal job offer.

### BACKGROUND OF INVENTION

Users searching for a job position and recruiters searching for adequate candidates are usually using employment web platforms which displays searchable lists of job offers to the users, and lists of candidates who applied for the job offer to the recruiter.

However, the users may not be completely aware of their own skills (soft and hard skills), and their adequacy with a specific job offer. Recruiters also spend a lot of time analyzing the candidates' qualifications and experiences for a specific job offer, and sometimes miss alternate opportunities because the user did not explicitly write the adequate skills in his/her resume for the job. Sometimes, resumes are generic and not tailored to a specific job offer, thus making it more difficult to identify the right candidate.

There is thus a need for a device and method for associating a user profile to an optimal job offer, which improves the relevancy of job offers proposed to the user and the adequacy of the candidates to the job offer for the recruiters.

It is also an object of the present invention to provide more than just a matching between a user profile and job offers, by giving the user the opportunity to improve its skills in order to increase its chances of being recruited for a specific job offer.

### SUMMARY

The present invention relates to, according to an aspect, a device for providing to a user information on at least one job offer based on the analysis of the user's information associated to its career, qualifications and education, said device comprising: at least one input configured to receive: at least one structured text comprising the user's information associated to his career, qualifications and education; a list of job offers comprising, for each job offer, at least one qualification and at least one skill required for the associated job offer; a list of available qualifications associated to the job offers of the list of job offers; at least one processor configured to: estimate at least one skill of the user using a previously trained first machine learning algorithm configured to receive as input the at least one structured text and provide as output at least one skill; for each available qualification from the list of available qualifications that is not already acquired by the user, evaluate an effort score representing an effort for the user to obtain said available qualification and, using the estimated at least one skill of the user, evaluate at least one missing skill of the user necessary to obtain said available qualification; compute a matching score between the user and each of the job offer in the list of job offers using a binary classification machine learning model; apply at least one predefined rule based on the matching score and/or said effort score, so as to obtain at least one proposition of job offer chosen from the list of job offers.

This device allows to match a user's profile with an optimal job offer in a very simple and automatic way. The speed of processing is also improved using this device.

According to other advantageous aspects of the invention, the device comprises one or more of the features described in the following embodiment, taken alone or in any possible combination.

In an embodiment, career refers to a professional experience declared by the user.

In an embodiment, qualification refers to, for example, the various driving licenses (especially for CASES-type machines) or other certifications and authorizations (first aid, high voltage electrical).

In an embodiment, education refers to the user's diploma and/or certificates.

In an embodiment, the skills comprise soft skills and/or hard skills.

According to an embodiment, the effort score may be designated as X^{∗}(1,2)^N where: X is a continuous value ranging from 0 to 1, corresponding to the distance between the expertise domain of the user and the application domain of the qualification; and N correspond to the minimal number of days required to accomplish the certification. X can thus be considered as a measure of the distance between the expertise domain of the user and the application domain of the qualification.

According to an embodiment, applying at least one predefined rule comprises, for each job offer: obtaining a final score by merging the matching score with said effort score associated to the at least one qualification needed for said job offer and compare said final score to a predefined threshold; in response to the final score exceeding the predefined threshold, associating the job offer to a label related to a long-term job opportunity; in response to the final score not exceeding the predefined threshold, evaluating an increase of chances of obtaining the job associated to the job offer by obtaining the associated qualification. Thus, the device outputs a career path for the user.

According to an embodiment, the at least one predefined rule is a second machine learning model configured to receive as input at least the matching score and/or the effort score and provide as output a probability of suitability between the user and each job offer of the list of job offer.

According to an embodiment, the first machine learning algorithm is a classifier. It may be a multi-head attention based model.

According to an embodiment, the first machine learning algorithm is a convolutional neural network.

According to an embodiment, the loss function used for training the convolutional neural network is a binary cross entropy loss function.

According to an embodiment, the first machine learning algorithm is a transformer encoder decoder.

According to an embodiment, the at least one processor is further configured to process the at least one structured text in order to add to the at least one structured text a predefined job label when the presence of at least one predefined set of words is detected in the at least one structured text.

According to an embodiment, the binary classification machine learning model is a XGBoost.

According to an embodiment, the XGBoost is configured to receive as input multiple features associated to at least one of the following: geographic distance between the user and the job offer, proportion of qualification already acquired with respect to the once required for the job offer, experience of the user in the field associated to the job offer, period of experience in the field associated to the job offer, availability of a curriculum vitae, availability of hearth documents, availability of a valid bank account, number of exchange with a recruiter, number of messages sent in a predefined period of time to the recruiter, ration of validated job applications among all job applications.

The present invention relates to, according to another aspect, a computer-implemented method for providing to a user information on at least one job offer based on the analysis of the user's information associated to its career, qualifications and education, said method comprising:
a. receiving data comprising:
   i. at least one structured text comprising the user's information associated to his career, qualifications and education;
   ii. a list of job offers comprising, for each job offer, at least one qualification and at least one skill required for the associated job offer; and
   iii. a list of available qualifications associated to the job offers of the list of job offers;
b. estimating at least one skill of the user using a previously trained first machine learning algorithm configured to receive as input the at least one structured text and provide as output at least one skill;
c. for each available qualification from the list of available qualifications that is not already acquired by the user, evaluate an effort score representing an effort for the user to obtain said available qualification and, using the estimated at least one skill of the user, evaluate at least one missing skill of the user necessary to obtain said available qualification;
d. computing a matching score between the user and each of the job offer in the list of job offers using a binary classification machine learning model; and
e. applying at least one predefined rule based on the matching score and/or said effort score, so as to obtain at least one proposition of job offer chosen from the list of job offers.

In addition, the disclosure relates to a computer program comprising software code adapted to perform a method as the one above for providing to a user information on at least one job offer based on the analysis of the user's information associated to its career, qualifications and education compliant with any of the above execution modes when the program is executed by a processor.

The present disclosure further pertains to a non-transitory program storage device, readable by a computer, tangibly embodying a program of instructions executable by the computer to perform a method as the one above for providing to a user information on at least one job offer based on the analysis of the user's information associated to its career, qualifications and education, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM) or a Flash memory, a portable CD-ROM (Compact-Disc ROM).

### DEFINITIONS

In the present invention, the following terms have the following meanings:

The terms "**adapted**" and "**configured**" are used in the present disclosure as broadly encompassing initial configuration, later adaptation or complementation of the present device, or any combination thereof alike, whether effected through material or software means (including firmware).

The term "**processor**" should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

### BRIEF DESCRIPTION OF THE DRAWINGS

**Figure 1** is a diagram showing a device according to a preferred embodiment of the invention.
**Figure 2** is a flowchart illustrating the main steps of a computer-implemented method according to a preferred embodiment of the invention.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

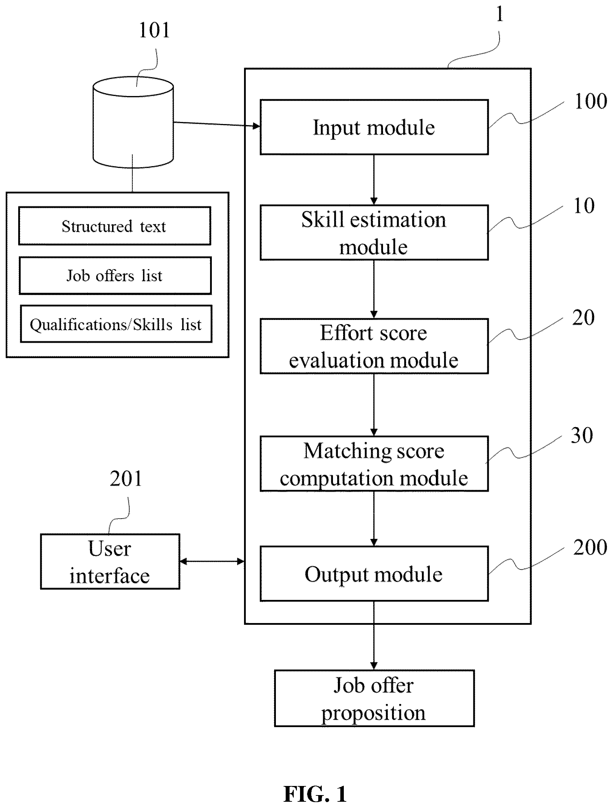

A device 1 according to an embodiment of the invention is shown in Figure 1. Though the presently described device 1 is versatile and provided with several functions that can be carried out alternatively or in any cumulative way, other implementations within the scope of the present disclosure include devices having only parts of the present functionalities.

Device 1 is advantageously an apparatus, or a physical part of an apparatus, designed, configured and/or adapted for performing the mentioned functions and produce the mentioned effects or results. In alternative implementations, device 1 is embodied as a set of apparatus or physical parts of apparatus, whether grouped in a same machine or in different, possibly remote, machines. Device 1 may for example have functions distributed over a cloud infrastructure and be available to users as a cloud-based service, or have remote functions accessible through an API.

In what follows, the modules are to be understood as functional entities rather than material, physically distinct, components. They can consequently be embodied either as grouped together in the same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 1.

As shown in Figure 1, device 1 for providing to a user information on at least one job offer based on the analysis of the user's information associated to its career, qualifications and education according to the invention comprises an input module 100 and an output module 200.

Input module 100 is configured to receive: at least one structured text comprising the user's information associated to his career, qualifications and education; a list of job offers comprising, for each job offer, at least one qualification and at least one skill required for the associated job offer; and a list of available qualifications associated to the job offers of the list of job offers.

The structured text, list of job offers and list of available qualifications may be stored in one or more local or remote database(s) 101. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk).

In advantageous embodiments, the data containing the structure text, list of job offers and list of available qualifications can be received from a communication network.

The input module 100 may be configured to process the at least one structured text in order to add to the at least one structured text a predefined job label when the presence of at least one predefined set of words is detected in the at least one structured text.

The structured text may be obtained for example from a resume or Curriculum Vitae (CV) of the user, downloaded for example on a website platform, or information directly recorded on a website platform. The CV may be processed (e.g. by OCR technology) to obtain a structured text.

Device 1 further comprises a skill estimation module 10 to estimate at least one skill of the user using a previously trained first machine learning algorithm configured to receive as input the at least one structured text and provide as output at least one skill (hard skill and/or soft skill).

The soft skill may be one or several of the following: motivation (dynamism, self-disciplined, initiative taking), resilience (flexibility, adaptability, perseverance), know how (on-time, easy to talk to, self-control, kindness, reliability, politeness), interpersonal (altruistic, patience, respect, openness, conflict management, communication, team work), engagement (reactivity, initiative taking, accountability), hygiene and safety, organization, or performance.

The hard skills correspond to the skills required and necessary to be able to perform the tasks associated with the job (e.g.: realization of operations of controls, measurements and tests; identify the evolutions of the ranges; loading/unloading of the trucks).

The first machine learning algorithm may be a convolutional neural network (CNN) or a transformer encoder decoder system, previously trained on a dataset comprising an ensemble of CVs and corresponding list of skills. The machine learning algorithm is therefore configured to predict a list of skills from the structured text. Advantageously, the loss function used for training the CNN is a binary cross entropy loss function.

Device 1 further comprises an effort score evaluation module 20 to evaluate, for each available qualification from the list of available qualifications that is not already acquired by the user, an effort score representing an effort for the user to obtain said available qualification and, using the estimated at least one skill of the user, evaluate at least one missing skill of the user necessary to obtain said available qualification.

According to an embodiment, the effort score may be designated as X^{∗}1,2^N where: X is a continuous value ranging from 0 to 1, corresponding to the distance between the expertise domain of the user and the application domain of the qualification; and N is the minimal number of days required to accomplish the certification.

Device 1 further comprises a matching score computation module 30 configured to compute a matching score between the user and each of the job offer in the list of job offers using a binary classification machine learning model. In an embodiment, the binary classification machine learning model is a XGBoost.

Advantageously, the XGBoost is configured to receive as input multiple features associated to at least one of the following: geographic distance between the user and the job offer, proportion of qualification already acquired with respect to the once required for the job offer, experience of the user in the field associated to the job offer, period of experience in the field associated to the job offer, availability of a curriculum vitae, availability of hearth documents, availability of a valid bank account, number of exchange with a recruiter, number of messages sent in a predefined period of time to the recruiter, ration of validated job applications among all job applications.

Finally, output module 200 is configured to apply at least one predefined rule based on the matching score and/or said effort score, so as to obtain at least one proposition of job offer chosen from the list of job offers.

In an embodiment, applying at least one predefined rule comprises, for each job offer: obtaining a final score by merging the matching score with said effort score associated to the at least one qualification needed for said job offer and compare said final score to a predefined threshold; in response to the final score exceeding the predefined threshold, associating the job offer to a label related to a long-term job opportunity; in response to the final score not exceeding the predefined threshold, evaluating an increase of chances of obtaining the job associated to the job offer by obtaining the associated qualification.

This feature is particularly advantageous as it values the short-term opportunities to increase the user chances of being recruited. In particular, the device may output a list of concrete actions available to the user to improve his chances to be recruited, with details of the certifications he can obtain and the list of hard and soft skills that can be obtained upon training.

Advantageously, the at least one predefined rule is a second machine learning model configured to receive as input at least the matching score and/or the effort score and provide as output a probability of suitability between the user and each job offer of the list of job offer.

Device 1 is interacting with a user interface 201, via which information can be entered and retrieved by the user. The user interface 201 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

The device 1 according to the invention may thus be very useful to provide a user searching for a job, a career path comprising for example a plan of the possible evolution inside its field of activity, and the possibilities of professional reconversion at his disposal.

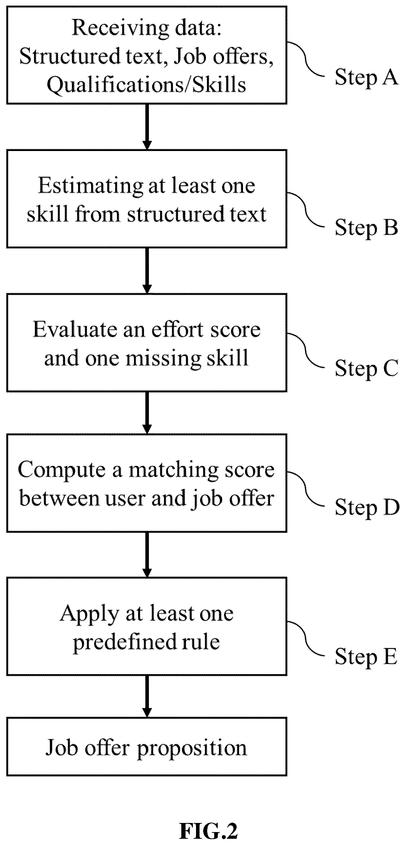

Figure 2 is a flowchart showing the main steps of a computer-implemented method for providing to a user information on at least one job offer based on the analysis of the user's information associated to its career, qualifications and education, according to the invention. Said computer-implemented method can be implemented by a device 1 as described above.

The method illustrated comprises:
a. a receiving step (Step a) of receiving data comprising:
   i. at least the structured text comprising the user's information associated to his career, qualifications and education;
   ii. the list of job offers comprising, for each job offer, at least one qualification and at least one skill required for the associated job offer; and
   iii. the list of available qualifications associated to the job offers of the list of job offers;
b. an estimating step (Step B), of estimating at least one skill of the user using a previously trained first machine learning algorithm configured to receive as input the at least one structured text and provide as output at least one skill;
c. for each available qualification from the list of available qualifications that is not already acquired by the user, an evaluating step (Step C) of evaluating the effort score representing an effort for the user to obtain said available qualification and, using the estimated at least one skill of the user, evaluating at least one missing skill of the user necessary to obtain said available qualification;
d. a computing step (Step D), of computing the matching score between the user and each of the job offer in the list of job offers using a binary classification machine learning model; and
e. a final step (Step E) of applying at least one predefined rule based on the matching score and/or said effort score, so as to obtain at least one proposition of job offer chosen from the list of job offers.

## Claims

1. A device (1) for providing to a user information on at least one job offer based on the analysis of the user's information associated to its career, qualifications and education, said device (1) comprising:
- at least one input configured to receive:
o at least one structured text comprising the user's information associated to his career, qualifications and education;
o a list of job offers comprising, for each job offer, at least one qualification and at least one skill required for the associated job offer;
o a list of available qualifications associated to the job offers of the list of job offers;
- at least one processor configured to:
o estimate at least one skill of the user using a previously trained first machine learning algorithm configured to receive as input the at least one structured text and provide as output at least one skill;
o for each available qualification from the list of available qualifications that is not already acquired by the user, evaluate an effort score representing an effort for the user to obtain said available qualification and, using the estimated at least one skill of the user, evaluate at least one missing skill of the user necessary to obtain said available qualification;
o compute a matching score between the user and each of the job offer in the list of job offers using a binary classification machine learning model;
o apply at least one predefined rule based on the matching score and/or said effort score, so as to obtain at least one proposition of job offer chosen from the list of job offers.

2. The device (1) according to claim 1, wherein applying at least one predefined rule comprises, for each job offer:
a. obtaining a final score by merging the matching score with said effort score associated to the at least one qualification needed for said job offer and compare said final score to a predefined threshold;
b. in response to the final score exceeding the predefined threshold, associating the job offer to a label related to a long-term job opportunity;
c. in response to the final score not exceeding the predefined threshold, evaluating an increase of chances of obtaining the job associated to the job offer by obtaining the associated qualification.

3. The device (1) according to claim **1** or claim **2**, wherein the at least one predefined rule is a second machine learning model configured to receive as input at least the matching score and/or the effort score and provide as output a probability of suitability between the user and each job offer of the list of job offer.

4. The device (1) according to any one of claims **1** to **3**, wherein the first machine learning algorithm is a convolutional neural network.

5. The device (1) according to any one of claims **1** to **4**, wherein the loss function used for training the convolutional neural network is a binary cross entropy loss function.

6. The device (1) according to any one of claims **1** to **3**, wherein the first machine learning algorithm is a transformer encoder decoder.

7. The device (1) according to any one of claims **1** to **6**, wherein the at least one processor is further configured to process the at least one structured text in order to add to the at least one structured text a predefined job label when the presence of at least one predefined set of words is detected in the at least one structured text.

8. The device (1) according to any one of claims **1** to **7**, wherein the binary classification machine learning model is a XGBoost.

9. The device (1) according to claim **8**, wherein the XGBoost is configured to receive as input multiple features associated to at least one of the following: geographic distance between the user and the job offer, proportion of qualification already acquired with respect to the once required for the job offer, experience of the user in the field associated to the job offer, period of experience in the field associated to the job offer, availability of a curriculum vitae, availability of hearth documents, availability of a valid bank account, number of exchange with a recruiter, number of messages sent in a predefined period of time to the recruiter, ration of validated job applications among all job applications.

10. A computer-implemented method for providing to a user information on at least one job offer based on the analysis of the user's information associated to its career, qualifications and education, said method comprising at least the following steps:
a. receiving data (Step A) comprising:
i. at least one structured text comprising the user's information associated to his career, qualifications and education;
ii. a list of job offers comprising, for each job offer, at least one qualification and at least one skill required for the associated job offer; and
iii. a list of available qualifications associated to the job offers of the list of job offers;
b. estimating (Step B) at least one skill of the user using a previously trained first machine learning algorithm configured to receive as input the at least one structured text and provide as output at least one skill;
c. for each available qualification from the list of available qualifications that is not already acquired by the user, evaluating (Step C) an effort score representing an effort for the user to obtain said available qualification and, using the estimated at least one skill of the user, evaluate at least one missing skill of the user necessary to obtain said available qualification;
d. computing (Step D) a matching score between the user and each of the job offer in the list of job offers using a binary classification machine learning model; and
e. applying at least one predefined rule (Step E) based on the matching score and/or said effort score, so as to obtain at least one proposition of job offer chosen from the list of job offers.

11. A computer program product comprising instructions which, when the program is executed by a computer, cause the computer to carry out the method according to claim **10.**
